**Europäisches Patentamt**

**European Patent Office**

**Office européen des brevets**

(19)

(11) Veröffentlichungsnummer : **0 049 702 B1**

# EUROPÄISCHE PATENTSCHRIFT

(12)

(45) Veröffentlichungstag der Patentschrift : **13.06.84**

(51) Int. Cl.³ : **F 02 D   5/02**

(21) Anmeldenummer : **81890165.4**

(22) Anmeldetag : **08.10.81**

(54) **Verfahren zur Steuerung des Förderbeginns einer Einspritzpumpe sowie Vorrichtung zur Durchführung dieses Verfahrens.**

(30) Priorität : **08.10.80 AT 4999/80**

(43) Veröffentlichungstag der Anmeldung :
**14.04.82 Patentblatt 82/15**

(45) Bekanntmachung des Hinweises auf die Patenterteilung : **13.06.84 Patentblatt 84/24**

(84) Benannte Vertragsstaaten :
**AT DE FR GB**

(56) Entgegenhaltungen :
**FR-A- 2 098 627**
**GB-A- 2 014 656**
**US-A- 3 897 766**
**US-A- 4 143 632**

(73) Patentinhaber : **Friedmann & Maier Aktiengesellschaft**
**Friedmannstrasse 7**
**A-5400 Hallein bei Salzburg (AT)**

(72) Erfinder : **Lehner, Gerhard, Dipl. Ing. Dr.**
**Pabensteinstrasse 9**
**A-5400 Hallein (AT)**
Erfinder : **Stipek, Theodor, Dipl. Ing.**
**Gamperstrasse 15**
**A-5400 Hallein (AT)**

(74) Vertreter : **Kretschmer, Adolf, Dipl.-Ing.**
**Patentanwälte Dipl.Ing. A. Kretschmer Dr. Thomas M.**
**Haffner Schottengasse 3a**
**A-1014 Wien (AT)**

## Beschreibung

Die Erfindung bezieht sich auf ein Verfahren zur Steuerung des Förderbeginns einer Einspritzpumpe für Einspritzbrennkraftmaschinen, insbesondere zur Kraftstoffeinspritzung an einem Dieselmotor, bei welchem Betriebsgrößen wie Drehzahl, Ladedruck, Motortemperatur od. dgl., gemessen werden und das jeweils vom Motor abgegebene Drehmoment ermittelt wird, worauf in Abhängigkeit von dem ermittelten Motordrehmoment unter Berücksichtigung zumindest der gemessenen Drehzahl der Förderbeginn der Kraftstoffeinspritzpumpe verstellt wird, sowie auf eine zur Durchführung dieses Verfahrens geeignete Vorrichtung.

Es ist bekannt, daß die Schadstoffemission von Verbrennungsmotoren durch geeignete Wahl des Zündzeitpunktes bei Ottomotoren bzw. des Einspritzbeginns bei Einspritzbrennkraftmaschinen, insbesondere bei Dieselmotoren, wesentlich verringert werden kann. Dabei ist als Parameter für die relative Verlagerung dieses maßgeblichen Punktes neben der Motordrehzahl auch die Last von Wichtigkeit, die bei Ottomotoren durch die Einleitung des Unterdruckes im Saugrohr auf eine federbelastete Membrane zur Zündzeitpunktverstellung eingesetzt wird.

Aus der DE-A-29 03 875 ist bereits eine Einrichtung zur Durchführung des eingangs genannten Verfahrens bekannt geworden, bei welcher neben einem der Drehzahl proportionalen elektrischen Signal die Stellung der Regelstange der Einspritzpumpe zur Ermittlung der Belastung des Motors herangezogen wird, wobei an der Regelstange ein Positionsgeber angeordnet ist.

Die Stellung der Regelstange ist aber insbesondere im Schubbetrieb ein ungenügendes Kriterium für das tatsächliche Ausmaß der Belastung des Motors und die Verwendung von Positionsgebern an der Regelstange erfordert eine zusätzliche Kompensation der thermischen Ausdehnung der Regelstange im Betrieb. Insbesondere bei Kraftfahrzeugmotoren, bei welchen häufig ein Schubbetrieb auftritt, kann daher mit der bekannten Einrichtung die Schadstoffemission nicht in der erforderlichen Weise optimiert werden.

Die Erfindung zielt nun darauf ab, ein Verfahren der eingangs genannten Art zu schaffen, mit welchem die Schadstoffemission und der Verbrauch einer Einspritzbrennkraftmaschine, insbesondere eines Dieselmotors, bei allen Betriebszuständen und insbesondere auch im Schubbetrieb verringert werden kann. Zur Lösung dieser Aufgabe besteht die Erfindung im wesentlichen darin, daß das Motordrehmoment aus wenigstens einem Meßwert für den Druck in der Hochdruckleitung der Einspritzpumpe oder dem Reaktionsmoment der Einspritzpumpe ermittelt wird. Sowohl das Reaktionsmoment der Einspritzpumpe als auch der Druck in der Hochdruckleitung der Einspritzpumpe lassen sich mit besonders einfachen und betriebssicheren Meßwertaufnehmern bestimmen, und es kann aus diesen Meßwerten auch im Schubbetrieb eine unmittelbare Steuergröße, welche dem tatsächlichen Belastungszustand des Motors Rechnung trägt, abgeleitet werden. Durch die Messung des Signals für das Motordrehmoment und die Verarbeitung dieser Meßgröße in einem Mikroprozessor läßt sich eine Stellgröße für die Verstellung des Einspritzzeitpunktes errechnen, wobei die lastabhängige Verstellung des Spritzbeginns beim Dieselmotor neben der Verringerung der Schadstoffemission auch eine Verbesserung der Leistungs- und Verbrauchswerte und eine Verminderung der thermischen und mechanischen Beanspruchung der Motorbauteile mit sich bringt.

Der Einspritzzeitpunkt muß in bekannter Weise in Abhängigkeit von der Motordrehzahl verstellt werden und die Verwendung eines Mikroprozessors ermöglicht es, in besonders einfacher Weise die Einflüsse von Motordrehzahl und Lastmoment gleichzeitig in eine gemeinsame Stellgröße für die Verstellung des Einspritzzeitpunktes umzusetzen. Die Verstellung des Einspritzzeitpunktes kann je nach Konstruktion der Einspritzpumpe in verschiedener Weise erfolgen; beispielsweise kann bei einer Ausbildung, bei welcher die Einspritzpumpe über einen Kipphebel von einer Nockenwelle angetrieben wird, der Lagerpunkt durch Betätigung eines Exzenters verschoben werden, wodurch sich ein früherer oder späterer Einspritzzeitpunkt ergibt. Die Verstellung dieses Exzenters kann beispielsweise hydraulisch oder elektrisch, beispielsweise mittels eines Schrittmotors, erfolgen. Eine Einrichtung zur Feststellung des Förderbeginns einer Einspritzpumpe ist beispielsweise aus der AT-B-298 881 bekannt geworden. Bei dieser Ausbildung wird eine Kupplungsmuffe axial verschoben, wodurch die beiden durch die Muffe verbundenen Wellen, welche Außenverzahnungen mit verschiedenen Steigungen aufweisen, gegeneinander verdreht werden. Die Verschiebung der Kupplungsmuffe dieser bekannten Einrichtung kann beispielsweise hydraulisch, elektrisch und insbesondere mittels eines Schrittmotors erfolgen. Bei Einspritzpumpen, welche eine gesonderte Regelstange für die Verstellung des Einspritzzeitpunktes aufweisen, kann beispielsweise ein Schrittmotor unmittelbar kraftschlüssig mit dieser Regelstange gekoppelt werden. Ein Schrittmotor könnte ohne Zwischenschaltung von weiteren Bauteilen vom Mikroprozessor angesteuert werden. Für eine hydraulische Betätigung des Spritzverstellers müßte eine entsprechende mechanisch-hydraulische Umsetzung des Stellsignales erfolgen. Erfindungsgemäß kommen eine Reihe von Signalen für eine Auswertung in einem Mikroprozessor in Betracht, welche entweder direkt proportional der Last sind oder aber in einer einfachen Gesetzmäßigkeit zur Last stehen.

Vorzugsweise kann das Verfahren so durchgeführt werden, daß das Motordrehmoment aus dem Spitzenwert oder dem Mittelwert des Leitungsdruckes in der Hochdruckleitung der Einspritzpumpe während eines Zylinderlastspiels ermittelt wird. Für verschiedene Einspritzmengen wird in einer Einspritzpumpe jeweils ein definierter Spitzendruck auftreten, wobei das Flächenintegral des Drucks über den Nockenwellenwinkel gemeinsam mit der Drehzahl des Motors ein unmittelbares Maß für das Motordrehmoment ergibt. In bevorzugter Weise wird hiebei das Motordrehmoment aus dem Druckverlauf in der Hochdruckleitung der Einspritzpumpe und aus der Motordrehzahl ermittelt, so daß eine noch genauere Ermittlung des tatsächlichen Belastungszustandes des Motors ermöglicht wird.

Es kann aber auch das Reaktionsmoment der Einspritzpumpe aus den Kräften auf die Lagerpunkte der Einspritzpumpe ermittelt werden, wodurch sich ebenfalls in allen Betriebszuständen eine relativ genaue Ermittlung des tatsächlichen Belastungszustandes des Motors ergibt.

Die erfindungsgemäße Vorrichtung zur Durchführung dieses Verfahrens weist Meßwertaufnehmer für Betriebsgrößen wie Drehzahl, Ladedruck, Motortemperatur od. dgl., sowie wenigstens einen weiteren Meßwertaufnehmer zur Ermittlung des jeweils vom Motor abgegebenen Drehmomentes auf, welche Meßwertaufnehmer mit einem Prozessor zum Ausführen von mindestens einer Rechenoperation verbunden sind, welcher Prozessor einen Speicher zur Speicherung des auszuführenden Programms aufweist, und mit einer mit dem Prozessor verbundenen Betätigungseinrichtung zur Steuerung des Beginns der Kraftstofförderung der Einspritzpumpe. Die genannte Vorrichtung ist erfindungsgemäß im wesentlichen dadurch gekennzeichnet, daß der Meßwertaufnehmer für die Ermittlung des Motordrehmoments als Druckmesser, insbesondere als Dehnungsmeßstreifen, für die Messung des Reaktionsmoments der Einspritzpumpe, des Druckes in der Hochdruckleitung der Einspritzpumpe oder des Druckverlaufes in der Hochdruckleitung der Einspritzpumpe ausgebildet ist. Es sind somit lediglich einfache und betriebssichere Bauteile für die Ermittlung des Belastungszustandes des Motors erforderlich, wobei vorzugsweise der Meßwertaufnehmer als piezoelektrischer Sensor für die Messung des Reaktionsmoments der Einspritzpumpe, des Druckes in der Hochdruckleitung der Einspritzpumpe oder des Druckverlaufes in der Hochdruckleitung der Einspritzpumpe ausgebildet sein kann.

Das den Mikroprozessor enthaltende Steuergerät kann mit einem Stellglied für die Einstellung des Beginns der Kraftstofförderung verbunden sein, welches von einem hydraulischen oder pneumatischen Arbeitskolben, einem elektrischen Hubmagneten, einem Elektromotor, einem elektrischen Stellmotor oder einem elektrischen Schrittmotor gebildet ist. Da dem Steuergerät nicht nur ein lastabhängiges Signal, sondern in der Regel auch ein der Drehzahl entsprechendes Signal zugeführt wird, lassen sich komplizierte Zusammenhänge mit einem gemeinsamen Stellglied dieser Art bewerkstelligen. Hiebei kann vorzugsweise so vorgegangen werden, daß auf Grund der in das Steuergerät eingesteuerten Drehzahl- und Lastsignale ein im Steuergerät gespeicherter Spritzverstellungskennwert abgerufen und dem Stellglied zugeordnet wird.

Die EP-A-49 701, die EP-A-49 703 und die EP-A-49 704, welche gleiche Anmelde- und Prioritätstage haben, beschreiben jeweils ein ähnliches Verfahren zur Steuerung des Förderbeginns einer Einspritzpumpe sowie eine ähnliche Vorrichtung zur Durchführung dieses Verfahrens, wobei lediglich das Drehmoment durch unterschiedliche Parameter ermittelt wird.

Die Erfindung wird nachfolgend an Hand der Zeichnung näher erläutert, in welcher eine Einrichtung zur last- und drehzahlabhängigen Spritzverstellung gezeigt ist, bei welcher die Spritzverstellung durch Differenzdrehbewegung zwischen pumpenantrieb und Pumpennockenwelle erzeugt wird.

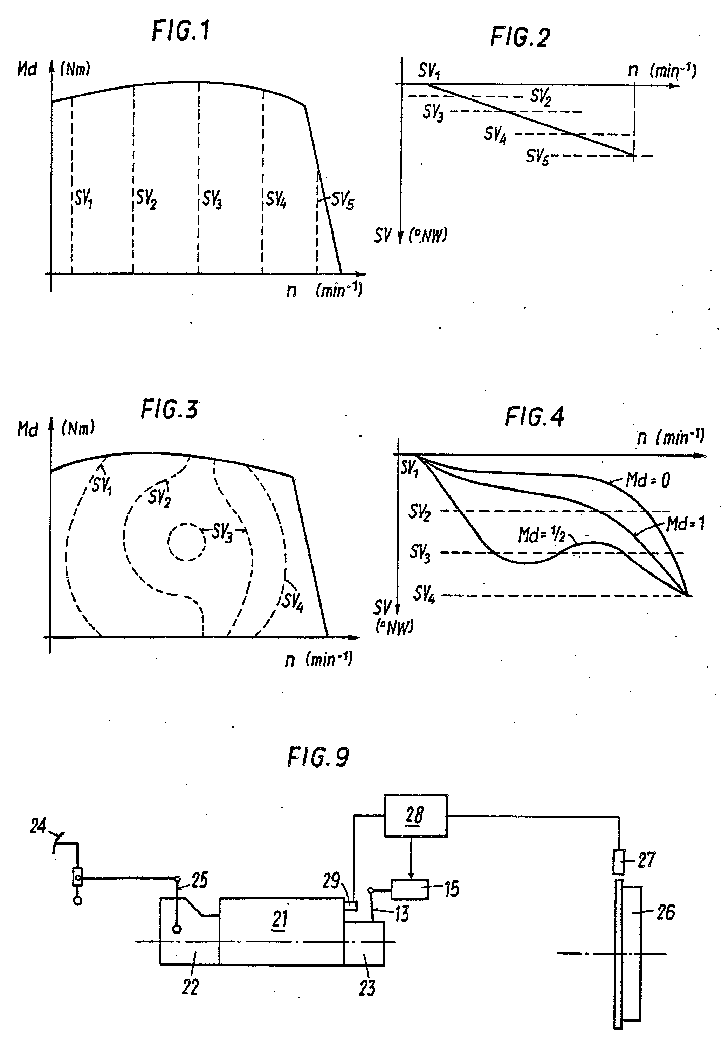

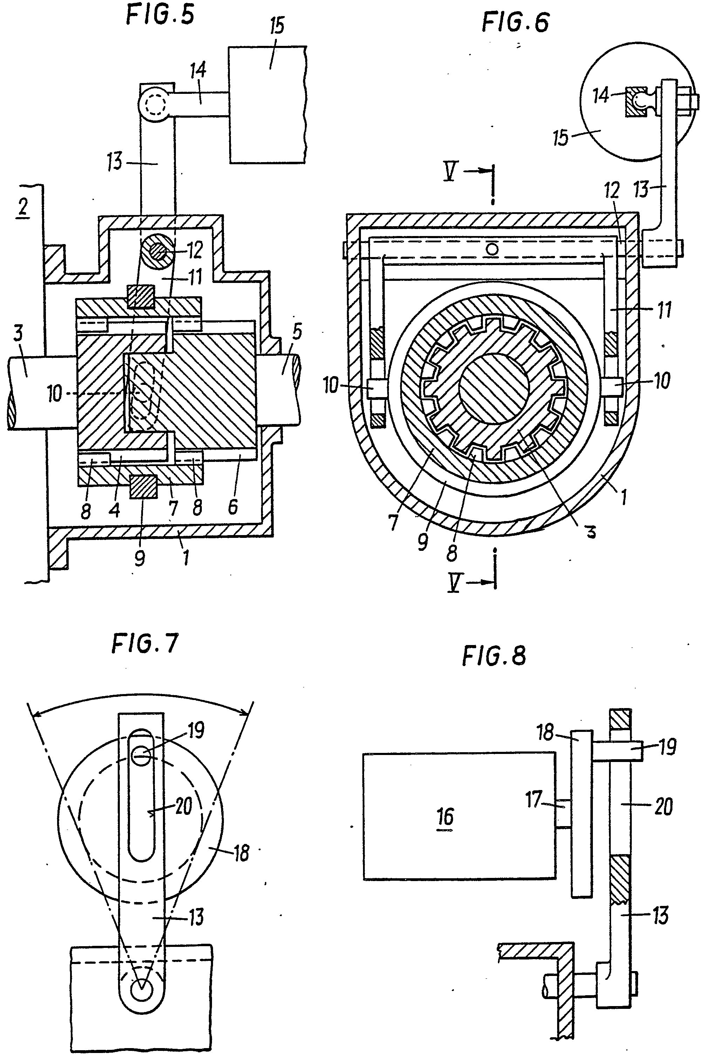

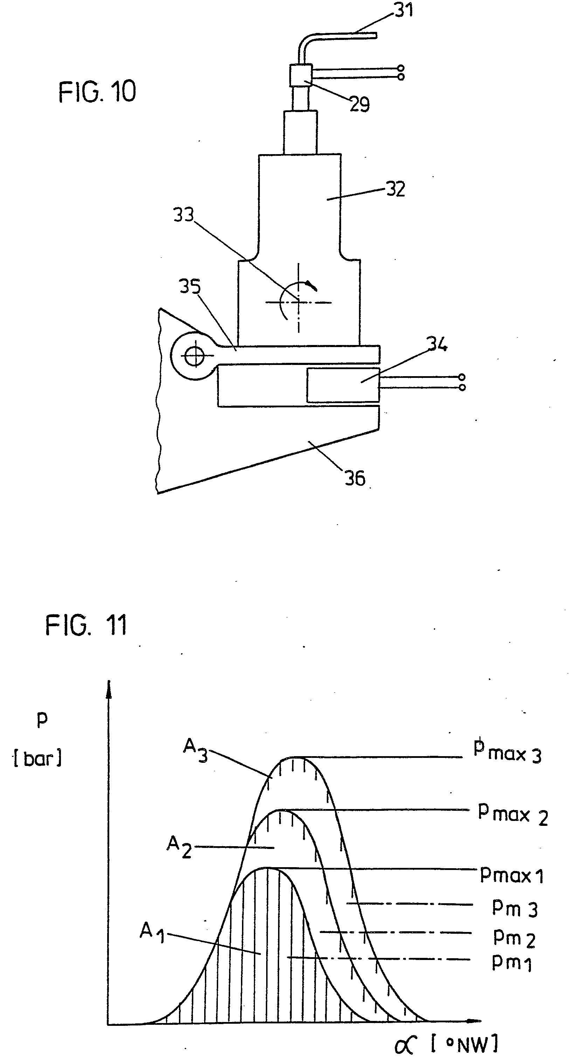

Fig. 1 und 2 zeigen den linearen Spritzverstellungsdrehzahlzusammenhang unabhängig vom Drehmoment des Motors, wie sie bei konventionellen Regelungen vorgenommen wird. Die Spritzverstellungskurven im Motorkennfeld sind daher Geraden über der Drehzahl. In Fig. 3 und 4 sind drehzahl- und lastabhängige Spritzverstellungen dargestellt, wie sie erfindungsgemäß erzielbar sind. Fig. 5 und 6 zeigen eine Einrichtung zur Verstellung des Drehwinkels zwischen Pumpenantrieb und Pumpennockenwelle im Schnitt, wobei Fig. 5 einen Schnitt nach der Linie V-V der Fig. 6 darstellt. Fig. 7 und 8 zeigen eine Ausbildung des Stellgliedes als Schrittmotor, Fig. 9 einen schematischen Gesamtaufbau für ein Einspritzsystem, Fig. 10 eine Anordnung von Meßwertaufnehmern in der Einspritzleitung und an der Lagerung der Einspritzpumpe und Fig. 11 eine schematische Darstellung des Zusammenhanges zwischen den gemessenen Druckwerten und dem entsprechenden Motordrehmoment.

In Fig. 1 ist auf der Abszisse die Motordrehzahl in $min^{-1}$ und auf der Ordinate das Motordrehmoment in Nm aufgetragen. Wie aus Fig. 2 hervorgeht, ergibt die Spritzverstellung bei verschiedenen Motordrehzahlen aufgetragen auf der negativen Ordinatenachse als Nockenwellenwinkel in Grad vor dem oberen Totpunkt des Kolbens der Brennkraftmaschine eine Gerade, welche bei der konventionellen Regelung unabhängig vom Motordrehmoment ist. Abweichend von derartigen konventionellen Verstellcharakteristiken sind in den Fig. 3 und 4 den Fig. 1 und 2 analoge Darstellungen für verschiedene Motordrehmomente wiedergegeben, wobei beliebige drehzahl- und lastabhängige Spritzverstellungen möglich sein sollen.

Die Möglichkeit für die Erzielung der in Fig. 3 und 4 wiedergegebenen Charakteristiken wird beispielsweise durch eine Ausbildung der Verstelleinrichtung für den Einspritzzeitpunkt nach den Fig. 5 und 6 gegeben, wobei das Stellglied von einer Steuereinrichtung angesteuert wird. In Fig. 5 und 6 ist mit 1 ein Gehäuse bezeichnet, das z. B. an dem Einspritzpumpengehäuse 2 angeflanscht ist. Im Gehäuse 1 befindet sich die Welle 3, die eine Außenverzahnung 4 besitzt. In der Welle 3 und im Gehäuse 1 ist eine zweite Welle 5 gelagert, die ebenfalls eine Außenverzahnung 6 trägt. Die Schiebemuffe 7, die eine Innenverzahnung 8 besitzt, ist über einen Gleitring 9 längs verschieblich. Durch die Kombination von Schrägverzahnungen bzw. Geradverzahnungen und Schrägverzahnungen wird durch die Längsverschiebung der Schiebemuffe 7 eine Relativbewegung der Wellen 3 und 5 zueinander erreicht. Auf dem Gleitring 9 sind Bolzen 10 angebracht, die über ein Gestänge 11, von einer Welle 12 und einem Außenhebel 13 betätigt werden. Je nach Lage des Außenhebels 13 ergibt sich nun eine ganz definierte Stellung der Schiebemuffe 7 und damit eine entsprechende Drehdifferenz zwischen den Wellen 3 und 5. Da die Drehdifferenz zwischen den Wellen 3 und 5 der Spritzverstellung proportional ist, kann damit über den Außenhebel 13 jede beliebige Spritzverstellung erreicht werden. Der Außenhebel 13 ist über eine Stange 14 mit einem Stellmotor 15 verbunden. Dieser steuert in Funktion der Motorlast und des Motordrehmomentes die Lage der Schiebemuffe 7 und damit die Spritzverstellung. Der Stellmotor 15 kann sowohl nach dem hydraulischen, pneumatischen oder elektrischen Prinzip arbeiten. Voraussetzung ist, daß der Stellmotor 15 allen vorkommenden Last- und Drehzahländerungen des Verbrennungsmotors folgen kann.

Fig. 7 und 8 zeigen ein Ausführungsbeispiel mit einem Schrittmotor 16. Der Schrittmotor zeichnet sich durch eine hohe Schrittfrequenz und eine hohe Genauigkeit aus. Auf der Welle 17 sitzt eine Scheibe 18, in der sich ein Bolzen 19 befindet. Dieser Bolzen 19 greift in eine Nut 20 des Außenhebels 13 ein. Je nach Drehlage des Schrittmotors wird nun der Außenhebel 13 betätigt und damit die erforderliche Spritzverstellung erreicht.

In Fig. 9 ist der schematische Gesamtaufbau für ein konventionelles Einspritzsystem dargestellt. Die Erfindung ist jedoch nicht notwendigerweise mit einem derartigen Einspritzsystem gekoppelt, sondern ist für jedes beliebige Einspritzsystem gedacht. An der Pumpe 21 befindet sich ein Regler 22 und der angebaute Spritzversteller 23. Über den Fahrfußhebel 24 wird nun der Außenhebel 25 des Reglers betätigt und damit die erforderliche Motordrehzahl bzw. Motorlast vorgewählt. An dem Schwungrad 26 des Verbrennungsmotors befindet sich ein Aufnehmer 27, der die Drehzahl mißt. Diese Drehzahl wird in das Steuergerät 28 übertragen. Gleichzeitig wird über einen Aufnehmer das Motordrehmoment festgestellt. In Fig. 9 ist dieser Aufnehmer mit 29 schematisch angedeutet. Das Signal des Meßwertaufnehmers 29, welches dem Lastmoment proportional ist, wird an das Steuergerät 28 weitergeleitet. In dem Steuergerät 28 sind die Soll-Spritzverstellungskennwerte gespeichert. Aus der Messung von Motordrehmoment und Motordrehzahl ist der Lastpunkt im Motorkennfeld genau definiert, und damit auch die erforderliche Spritzverstellung. Das Steuergerät 28 steuert nun entsprechend dem Motorlastpunkt den Stellmotor 15 an, der über den Außenhebel 13 die gewünschte Spritzverstellung einstellt.

In Fig. 10 ist der Meßwertaufnehmer 29 als Druckgeber für den Einspritzdruck in die Einspritzleitung 31 eingeschaltet bzw. am Umfang der Einspritzleitung festgelegt. Die Einspritzpumpe ist hiebei mit 32 bezeichnet und wird von einer um die Achse 33 drehbaren, nicht dargestellten Nockenwelle angetrieben. Anstelle des Meßwertaufnehmers 29 oder zusätzlich zu demselben, kann eine Kraftmeßdose 34 am Aufleger der Einspritzpumpe 32 angeordnet sein, wobei die Einspritzpumpe 32 an einem schwenkbaren Arm 35 festgelegt ist. Der schwenkbare Arm 35 ist an einem starren Teil 36 des Motors angelenkt, so daß die Kraftmeßdose 34 die Reaktionskräfte der Einspritzpumpe 32 mißt. Die Signale des Meßwertaufnehmers 29 bzw. der Kraftmeßdose 34 werden an den Mikroprozessor in der Steuerschaltung 28 weitergeleitet.

In Fig. 11 ist der gemessene Druck über den Nockenwellenwinkel aufgetragen. Verschiedene Einspritzmengen entsprechen nun den gemessenen Werten des Einspritzdruckes $P_{max1}$, $P_{max2}$ und $P_{max3}$. Jedem derartigen Spitzenwert entspricht ein mittlerer Druckwert $P_{m1}$, $P_{m2}$ bzw. $P_{m3}$. Aus dem Kurvenverlauf läßt sich die Fläche unterhalb der jeweiligen Kurve durch Integration berechnen und die berechneten Flächen $A_1$, $A_2$ bzw. $A_3$ ergeben ein Maß für das Motordrehmoment, wobei zusätzlich noch die Drehzahl des Motors berücksichtigt werden muß.

Als weitere Ausführungsform ist denkbar, daß die beliebige last- und drehzahlabhängige Spritzverstellung über eine lastabhängige Bedienung des Außenhebels der Einrichtung gemäß der AT-B-298 881 erreicht wird. Die drehzahlabhängige Spritzverstellung kann in Abhängigkeit von dem beispielsweise in der AT-B-298 881 dargestellten Drehzahlmeßwerk erfolgen. Bei Verwendung eines Mikroprozessors lassen sich die Werte für die Drehzahl und für lastabhängige Signale in beliebiger Weise kombinieren, sodaß den speziellen Erfordernissen einer bestimmten Brennkraftmaschine in verbessertem Maße Rechnung getragen werden kann.

**Ansprüche**

1. Verfahren zur Steuerung des Förderbeginns einer Einspritzpumpe für Einspritzbrennkraftmaschinen, insbesondere zur Kraftstoffeinspritzung an einem Dieselmotor, bei welchem Betriebsgrößen wie Drehzahl, Ladedruck, Motortemperatur od. dgl., gemessen werden und das jeweils vom Motor abgegebene Drehmoment ermittelt wird, worauf in Abhängigkeit von dem ermittelten Motordrehmoment unter Berücksichtigung zumindest der gemessenen Drehzahl der Förderbeginn der Kraftstoffeinspritzpumpe verstellt wird, dadurch gekennzeichnet, daß das Motordrehmoment aus wenigstens einem Meßwert für den Druck in der Hochdruckleitung (31) der Einspritzpumpe (32) oder dem Reaktionsmoment der Einspritzpumpe (32) ermittelt wird.

2. Verfahren nach Anspruch 1, dadurch gekennzeichnet, daß das Motordrehmoment aus dem Spitzenwert oder dem Mittelwert des Leitungsdruckes in der Hochdruckleitung (31) der Einspritzpumpe (32) während eines Zylinderlastspiels ermittelt wird.

3. Verfahren nach Anspruch 1 oder 2, dadurch gekennzeichnet, daß das Motordrehmoment aus dem Druckverlauf in der Hochdruckleitung (31) der Einspritzpumpe (32) und aus der Motordrehzahl ermittelt wird.

4. Verfahren nach Anspruch 1, dadurch gekennzeichnet, daß das Reaktionsmoment der Einspritzpumpe aus den Kräften auf die Lagerpunkte der Einspritzpumpe ermittelt wird.

5. Vorrichtung zur Durchführung des Verfahrens nach einem der Ansprüche 1 bis 4 mit Meßwertaufnehmern (27) für Betriebsgrößen wie Drehzahl, Ladedruck, Motortemperatur od. dgl., sowie wenigstens einem weiteren Meßwertaufnehmer (29, 34) zur Ermittlung des jeweils vom Motor abgegebenen Drehmoments, welche Meßwertaufnehmer mit einem Prozessor zum Ausführen von mindestens einer Rechenoperation verbunden sind, welcher Prozessor einen Speicher zur Speicherung des auszuführenden Programms aufweist, und mit einer mit dem Prozessor verbundenen Betätigungseinrichtung (13, 15) zur Steuerung des Beginns der Kraftstofförderung der Einspritzpumpe (21, 32), dadurch gekennzeichnet, daß der Meßwertaufnehmer (29, 34) für die Ermittlung des Motordrehmoments als Druckmesser, insbesondere als Dehnungsmeßstreifen, für die Messung des Reaktionsmoments der Einspritzpumpe (32), des Druckes in der Hochdruckleitung (31) der Einspritzpumpe (32) oder des Druckverlaufes in der Hochdruckleitung (31) der Einspritzpumpe (32) ausgebildet ist.

6. Vorrichtung nach Anspruch 5, dadurch gekennzeichnet, daß der Meßwertaufnehmer (34) als piezoelektrischer Sensor für die Messung des Reaktionsmoments der Einspritzpumpe (32), des Druckes in der Hochdruckleitung (31) der Einspritzpumpe (32) oder des Druckverlaufes in der Hochdruckleitung (31) der Einspritzpumpe (32) ausgebildet ist.

## Claims

1. A method of controlling the timing of an injection pump for injection-type internal combustion engines, particularly for the fuel injection into a Diesel engine, in which method operating parameters such as revolution speed, intake pressure, temperature of the engine or the like are measured and the torque supplied by the engine is determined, whereupon the begin of delivery of the fuel injection pump is adjusted in dependence on the engine torque determined and with consideration of at least the measured revolution speed, characterised in that the engine torque is determined from at least one measured value for the pressure within the high pressure conduit (31) of the injection pump (32) or from the reaction moment of the injection pump (32).

2. A method as claimed in claim 1, characterised in that the engine torque is determined from the peak value or from the mean value of the pressure within the high pressure conduit (31) of the injection pump (32) during one cylinder load cycle.

3. A method as claimed in claim 1 or 2, characterised in that the engine torque is determined from the pressure pattern within the high pressure conduit (31) of the injection pump (32) and from the rotation speed of the engine.

4. A method as claimed in claim 1, characterised in that the reaction moment of the injection pump is determined from the forces acting on the supporting points of the injecting pump.

5. An apparatus for performing the method as claimed in any one of claims 1 to 4, comprising sensors (27) for operating parameters such as revolution speed, intake pressure, engine temperature or the like as well as at least on further sensor (29, 34) for determining the torque supplied by the engine, said sensors being connected with a processor for performing at least one calculating operation and said processor comprising a store for storing the program to be executed, said apparatus further comprising an actuating means (13, 15) for controlling the begin of fuel delivery of the injection pump (21, 32) and said actuating means being connected with the processor, characterised in that the sensor (29, 34) for determining the engine torque is designed as pressure gauge, particularly as strain gauge, for measuring the reaction moment of the injection pump (32), the pressure within the high pressure conduit (31) of the injection pump (32) or the pressure pattern within the high pressure conduit (31) of the injection pump (32).

6. An apparatus as claimed in claim 5, characterised in that the sensor (34) is designed as a piezo-electric sensor for measuring the reaction torque of the injection pump (32), the pressure within the high pressure conduit (31) of the injection pump (32) or the pressure pattern within the high pressure conduit (31) of the injection pump (32).

## Revendications

1. Procédé pour commander l'avance d'une pompe d'injection pour moteurs à combustion interne à injection, en particulier pour l'injection de carburant dans un moteur diesel, dans lequel on mesure des grandeurs de fonctionnement telles que la vitesse de rotation, la pression d'admission, la température du moteur ou analogues et on détermine le couple délivré par le moteur, l'avance de la pompe d'injection de carburant étant réglée en fonction du couple moteur déterminé en prenant en compte au moins la vitesse de rotation mesurée, caractérisé par le fait que le couple moteur est déterminé à partir d'au moins une valeur mesurée de la pression dans le conduit haute-pression (31) de la pompe d'injection (32) ou du moment de réaction de la pompe d'injection (32).

2. Procédé selon la revendication 1, caractérisé par le fait que le couple moteur est déterminé à partir de la valeur de pointe ou de la valeur moyenne de la pression de conduit dans le conduit haute-pression (31) de la pompe d'injection (32) pendant un cycle de cylindre.

3. Procédé selon la revendication 1 ou 2, caractérisé par le fait que le couple moteur est déterminé à partir de la loi de pression dans le conduit haute-pression (31) de la pompe d'injection (32) et de la vitesse de rotation du moteur.

4. Procédé selon la revendication 1, caractérisé par le fait que le moment de réaction de la pompe d'injection est déterminé à partir des forces aux points de paliers de la pompe d'injection.

5. Dispositif pour la mise en œuvre du procédé selon l'une des revendications 1 à 4, comprenant des capteurs (27) pour des grandeurs de fonctionnement telles que la vitesse de rotation, la pression d'admission, la température du moteur ou analogues ainsi qu'au moins un autre capteur (29, 34) pour déterminer le couple délivré par le moteur, lesdits capteurs étant reliés à un calculateur pour effectuer au moins une opération de calcul, ledit calculateur comportant une mémoire pour contenir le programme à mettre en œuvre, et un mécanisme d'actionnement (13, 15) relié au calculateur pour commander le début de l'alimentation en carburant par la pompe d'injection (21, 32), caractérisé par le fait que le capteur (29, 34) pour déterminer le couple moteur est un capteur de pression, en particulier une jauge de contrainte pour la mesure du moment de réaction de la pompe d'injection (32), de la pression dans le conduit haute-pression (31) de la pompe d'injection (32) ou de la loi de pression dans le conduit haute-pression (31) de la pompe d'injection (32).

6. Dispositif selon la revendication 5, caractérisé par le fait que le capteur (34) est un détecteur piézoélectrique pour la mesure du moment de réaction de la pompe d'injection (32), de la pression dans le conduit haute-pression (31) de la pompe d'injection (32) ou de la loi de pression dans le conduit haute pression (31) de la pompe d'injection (32).

FIG.1

FIG.2

FIG.3

FIG.4

FIG.9

# FIG.5

# FIG.6

# FIG.7

# FIG.8

FIG. 10

FIG. 11